# EUROPÄISCHE PATENTSCHRIFT

(11) **EP 3 497 058 B1**
(45) Veröffentlichungstag und Bekanntmachung des Hinweises auf die Patenterteilung: **30.09.2020**
(21) Anmeldenummer: 17755082.9
(22) Anmeldetag: 03.08.2017
(51) Int. Cl.: C01C 1/04, B01J 8/04, F28D 9/00, B01J 19/24

(54) **SYNTHESEVORRICHTUNG UND VERFAHREN ZUR HERSTELLUNG EINES PRODUKTS**
SYNTHESIS DEVICE AND METHOD FOR PRODUCING A PRODUCT
DISPOSITIF DE SYNTHÈSE ET PROCÉDÉ DE PRODUCTION D'UN PRODUIT

(30) Priorität: 09.08.2016 DE 102016114713
(43) Veröffentlichungstag der Anmeldung: 19.06.2019
(73) Patentinhaber: thyssenkrupp Industrial Solutions AG, 45143 Essen (DE); thyssenkrupp AG, 45143 Essen (DE)
(72) Erfinder: GORVAL, Evgeni, 44135 Dortmund (DE); JOHANNING, Joachim, 46045 Oberhausen (DE); MICHEL, Reinhard, 44797 Bochum (DE)
(74) Vertreter: thyssenkrupp Intellectual Property GmbH
(86) Internationale Anmeldenummer: PCT/EP2017/069679
(87) Internationale Veröffentlichungsnummer: WO 2018/029082

(56) Entgegenhaltungen:
- WO-A1-2013/017609
- WO-A2-2010/103190
- US-A- 4 230 669

## Beschreibung

Die Erfindung betrifft eine Synthesevorrichtung, insbesondere eine Synthesevorrichtung für exotherme Reaktionen mit heterogener Katalyse. Bevorzugt betrifft die Erfindung einen Ammoniaksynthesekonverter. Die Synthesevorrichtung umfasst die folgenden Komponenten:
a) einen Druckbehälter, welcher einen Einlass und einen Auslass für ein Fluid umfasst;
b) mindestens ein Katalysatorbett, welches innerhalb des Druckbehälters angeordnet ist;
c) mindestens einen Wärmetauscher, wobei der Wärmetauscher im Strömungsweg des Fluids zwischen dem Einlass des Druckbehälters und dem Katalysatorbett derart angeordnet ist, dass das in das Katalysatorbett einströmende Fluid durch das aus dem Katalysatorbett ausströmende Fluid erwärmt wird, wobei der Wärmetauscher in der Synthesevorrichtung außerhalb des von dem Katalysatorbett in dem Druckbehälter eingenommenen Reaktorvolumens angeordnet ist, der Wärmetauscher als Plattenwärmetauscher ausgebildet ist und mindestens ein Katalysatorbett zylinderringförmig oder hohlzylindrisch ausgebildet ist und der Plattenwärmetauscher an der Innenseite des hohlzylindrischen Katalysatorbettes so angeordnet ist, dass letzteres den Plattenwärmetauscher konzentrisch umgibt.

Ferner betrifft die Erfindung ein Verfahren zur Herstellung eines Produkts gemäß dem Oberbegriff des Patentanspruchs 12.

Ammoniaksynthesekonverter umfassen üblicherweise mehrere Katalysatorbetten und Wärmetauscher, welche innerhalb eines Druckbehälters angeordnet sind.

In der WO 2014/040719 A1 werden ein Verfahren und eine Vorrichtung zur Herstellung von Dimethylether durch katalytische Dehydrierung von Methanol mit anschließender Destillation des dehydrierten Produkts beschrieben, wobei eine Synthesevorrichtung mit einem Druckbehälter verwendet wird, welcher mehrere Katalysatorbetten mit zwischengeschalteten Wärmetauschern enthalten kann. Als Wärmetauscher sollen sich hier alle bekannten Typen eignen, wobei neben Spiralwärmetauschern und Rohrbündelwärmetauschern auch Plattenwärmetauscher genannt werden, deren Aufbau jedoch im Detail nicht näher spezifiziert wird.

Die DE 10 2006 061 847 A1 offenbart einen Ammoniaksynthesekonverter mit wenigstens einem im Wesentlichen radial durchströmten Katalysatorbett, welches einen Rohrbündelwärmetauscher konzentrisch umgibt. Mittels des Rohrbündelwärmetauschers wird die Reaktionswärme des aus dem Katalysatorbett ausströmenden Fluids auf Fluid übertragen, welches in das Katalysatorbett eingeleitet wird. Diese Art von Wärmetauscher beansprucht aufgrund der geringen Wärmestromdichte ein relativ großes Volumen im Verhältnis zur übertragenen Wärmeleistung, welches dementsprechend nicht für weiteres Katalysatormaterial zur Verfügung steht. Dies wirkt sich negativ auf den Durchsatz des Synthesekonverters aus. Für die wirtschaftliche Auslegung eines Ammoniak-Konverters ist eine optimale Nutzung des Reaktorvolumens erforderlich. Dazu gehört eine sinnvolle Volumen-Aufteilung zwischen den Katalysatorbetten, den Wärmetauschern und den Zuleitungswegen. Bedingt durch die in der Regel verhältnismäßig hohen Arbeitsdrücke der Synthesereaktoren sind Druckbehälter zudem teure Komponenten. Eine Minimierung der entsprechend teuren Druckbehältervolumina ist deshalb generell anzustreben.

Aus der Druckschrift WO 2013/017609 A1 ist ein Reaktor zur Durchführung einer autothermen Gasphasendehydrierung bekannt mit einem gasdichten Gehäuse enthaltend einen Innenbereich mit mehreren katalytischen Zonen und einem Wärmetauscher, der ein Plattenwärmetauscher sein kann und der sich im Strömungsweg zwischen einem Einlass und einem Katalysatorbett befindet, derart, dass der zu dehydrierende Gasstrom im Wärmetauscher durch das Reaktionsgasgemisch aufgeheizt wird. Der Wärmetauscher kann unterhalb der Katalysatorbetten platziert sein.

In der US 4 230 669 A wird ein radialer Ammoniakkonverter beschrieben, bei dem sich in einem Druckbehälter hohlzylindrische Katalysatorbetten befinden und der mehrere Wärmetauscher aufweist. Über einen Teil seiner axialen Länge liegt eine der Wärmetauscher konzentrisch innerhalb eines der Katalysatorbetten, so dass das Prozessgas nach dem Durchströmen des Katalysatorbetts radial einwärts in den Wärmetauscher einströmt. Bei den Wärmetauschern dieses bekannten Ammoniakkonverters handelt es sich jedoch um Rohrbündelwärmetauscher.

Aus der WO 2010/103190 sind allgemein Plattenwärmetauscher bekannt, die mehrere Platten umfassen, wobei zwischen jeweils zwei benachbarten Platten ein durchströmbarer Zwischenraum gebildet ist, und wobei durchströmbare Zwischenräume einer ersten Gruppe in Fluidverbindung mit einem gemeinsamen, senkrecht zu den Platten verlaufenden ersten Fluidkanal stehen und zur Umgebung des Plattenwärmetauschers hin abgedichtet sind und durchströmbare Zwischenräume einer zweiten Gruppe mit der Umgebung in Fluidverbindung stehen und zu den Zwischenräumen der ersten Gruppe hin abgedichtet sind.

Vor diesem Hintergrund liegt der Erfindung die Aufgabe zugrunde, die Wirtschaftlichkeit der Synthesevorrichtung zu erhöhen.

Diese Aufgabe wird durch eine Synthesevorrichtung mit den Merkmalen des Anspruchs 1 bzw. ein Verfahren zur Herstellung eines Produkts mit den Merkmalen des Anspruchs 12 gelöst.

Ein erster Aspekt der Erfindung betrifft eine Synthesevorrichtung, insbesondere einen Ammoniaksynthesekonverter mit den Merkmalen der eingangs genannten Gattung, wobei der Wärmetauscher als Plattenwärmetauscher ausgebildet ist und dieser in der Synthesevorrichtung außerhalb des von dem Katalysatorbett in dem Druckbehälter eingenommenen Reaktorvolumens angeordnet ist, wobei mindestens ein Katalysatorbett zylinderringförmig oder hohlzylindrisch ausgebildet ist und der Plattenwärmetauscher an der Innenseite des hohlzylindrischen Katalysatorbettes so angeordnet ist, dass letzteres den Plattenwärmetauscher konzentrisch umgibt.

Die Synthesevorrichtung umfasst mindestens einen im Strömungsweg des Fluids zwischen dem Einlass des Druckbehälters und dem Katalysatorbett angeordneten Wärmetauscher, über welchen das Fluid vor dem Einleiten in das Katalysatorbett erwärmt werden kann. Der Wärmetauscher ist als Plattenwärmetauscher ausgebildet. Plattenwärmetauscher weisen im Vergleich zu Rohrbündelwärmetauschern gleicher Größe eine erhöhte Wärmestromdichte auf, so dass bei gleicher Wärmeleistung ein Wärmetauscher mit einem geringeren Volumen verwendet werden kann. Die durch den Einsatz eines Plattenwärmetauschers entstehende Volumeneinsparung kann zur Vergrößerung des Volumens des Katalysatorbetts genutzt werden, wodurch der Reaktionsdurchsatz und damit die Wirtschaftlichkeit der Synthesevorrichtung erhöht wird. Alternativ kann das Volumen des Druckbehälters, verringert werden, wodurch Produktions-, Bau- und/oder Montagekosten gespart werden können.

Der Druckbehälter weist bevorzugt eine zylindrische Form mit einer vertikal ausgerichteten Längsachse auf. Der Einlass des Druckbehälters ist bevorzugt am oberen Ende des Druckbehälters und der Auslass am unteren Ende des Druckbehälters angeordnet. Der Druckbehälter wird bevorzugt bei einem Druck im Bereich von 90 bis 400 bar betrieben. Der Begriff *"Fluid"* umfasst dabei bevorzugt Gase und Flüssigkeiten.

Weiterhin umfasst die Synthesevorrichtung mindestens ein Katalysatorbett, bevorzugter mindestens zwei oder mindestens drei Katalysatorbetten. Bevorzugt basiert die Synthesevorrichtung auf einer radialen Durchströmung der Katalysatorbetten, wobei die Katalysatorbetten bevorzugt die Form von Hohlzylindern aufweisen. Bevorzugt erfolgt die Zuführung der Fluide über zylindrische Mantelflächen der Katalysatorbetten. Die Fluide können die Katalysatorbetten sowohl radial von außen nach innen als auch radial von innen nach außen durchströmen. Innerhalb der Synthesevorrichtung können alle Katalysatorbetten radial von außen nach innen oder alle Katalysatorbetten radial von innen nach außen durchströmt werden. Ebenso kann innerhalb der Synthesevorrichtung mindestens ein Katalysatorbett radial von innen nach außen und mindestens ein anderes Katalysatorbett radial von außen nach innen durchströmt werden.

Erfindungsgemäß ist der als Plattenwärmetauscher ausgebildete Wärmetauscher nicht innerhalb eines Katalysatorbetts angeordnet, so dass eine Beeinträchtigung des Wärmetauschers durch die Katalysatorschüttung nicht zu befürchten steht.

Bevorzugt umfasst die Synthesevorrichtung mehrere Wärmetauscher. Es ist möglich, dass mehrere Wärmetauscher einem gemeinsamen Katalysatorbett zugeordnet sind, um das in das Katalysatorbett einströmende Fluid vorzuwärmen. Alternativ können mehrere Wärmetauscher vorgesehen sein, die jeweils einem Katalysatorbett zugeordnet sind, so dass das in das jeweilige Katalysatorbett einströmende Fluid über genau einen Wärmetauscher vorgewärmt wird. Die Wärmetauscher können alle als Plattenwärmetauscher ausgebildet sein. Grundsätzlich ist es im Rahmen der vorliegenden Erfindung auch möglich, zusätzlich zu dem oder den verwendeten Plattenwärmetauscher(n) noch ein oder mehrere Rohrbündelwärmetauscher in der Synthesevorrichtung anzuordnen.

Bei einer Synthesevorrichtung, die mehrere, vorzugsweise in axialer Richtung der Synthesevorrichtung übereinander angeordnete Katalysatorbetten aufweist, kann ein Wärmetauscher im Bereich zwischen zwei Katalysatorbetten vorgesehen sein, so dass das aus dem ersten Katalysatorbett ausströmende Fluid durch den Wärmetauscher zu dem zweiten Katalysatorbett geleitet werden kann. Bei dieser Anordnung kann ein zentral innerhalb eines hohlzylindrischen Katalysatorbettes angeordneter Rohrbündelwärmetauscher ersetzt und der erforderliche Bauraum des Wärmetauschers im Vergleich zu Synthesevorrichtungen mit Rohrbündelwärmetauschern minimiert werden.

Der Wärmetauscher ist im Bereich zwischen dem Katalysatorbett und einer Innenwand des Druckbehälters angeordnet, insbesondere derart, dass aus dem Katalysatorbett ausströmendes Fluid in den Wärmetauscher einströmen kann. Zwischen dem Wärmetauscher und der Innenwand des Druckbehälters kann optional eine weitere Wandung vorgesehen sein, beispielsweise eine Wandung eines innerhalb des Druckbehälters angeordneten Einsatzes. Über diese Wandung kann eine Führung des Fluids erfolgen. In einer bevorzugten Ausführungsform ist der Wärmetauscher zwischen der Außenseite des Katalysatorbettes und der Innenseite des Druckbehälters angeordnet. Bei einer Synthesevorrichtung, insbesondere bei einem Ammoniaksynthesekonverter, nach dem Stand der Technik wird damit der üblicherweise zentral innerhalb des hohlzylindrischen Katalysatorbettes angeordnete Rohrbündelwärmetauscher durch einen auf der Außenseite des Katalysatorbettes angeordneten Wärmetauscher ersetzt. Bei geeigneter Strömungsführung innerhalb des Wärmetauschers kann eine optimierte Wärmeübertragung erzielt werden, wodurch der für den Wärmetauscher erforderliche Bauraum minimiert werden kann.

Gemäß einer weiteren alternativen Ausgestaltung ist das Katalysatorbett ringförmig ausgebildet und umgibt den Wärmetauscher konzentrisch.

Bevorzugt strömt das aus dem Katalysatorbett ausströmende Fluid unmittelbar, bevorzugt seitlich, in den Wärmetauscher ein.

In einer weiteren bevorzugten Ausführungsform umfasst der Plattenwärmetauscher mehrere Platten, wobei zwischen jeweils zwei benachbarten Platten ein durchströmbarer Zwischenraum gebildet ist, und wobei
(i) durchströmbare Zwischenräume einer ersten Gruppe in Fluidverbindung mit einem gemeinsamen, senkrecht zu den Platten verlaufenden ersten Fluidkanal stehen und zur Umgebung des Plattenwärmetauschers hin abgedichtet sind; und
(ii) durchströmbare Zwischenräume einer zweiten Gruppe mit der Umgebung in Fluidverbindung stehen und zu den Zwischenräumen der ersten Gruppe hin abgedichtet sind.

Der Plattenwärmetauscher umfasst bevorzugt mindestens drei Platten, welche jeweils so zueinander angeordnet sind, dass die Längsausdehnungen der Platten parallel zueinander ausgerichtet sind. Besonders bevorzugt sind die Platten deckungsgleich angeordnet. Bevorzugt weisen die einzelnen Platten eine Dicke im Bereich von 0,5 mm bis 4 mm auf, bevorzugter im Bereich von 0,7 mm bis 3,5 mm, im Bereich von 0,8 mm bis 3 mm, im Bereich von 0,9 mm bis 2,5 mm, im Bereich von 1,0 mm bis 2,0 mm oder im Bereich von 1,0 mm bis 1,5 mm. Der Abstand zwischen zwei benachbarten Platten liegt bevorzugt im Bereich von 5 mm bis 40 mm, bevorzugter im Bereich von 6 mm bis 35 mm, im Bereich von 7 mm bis 30 mm, im Bereich von 8 mm bis 25 mm, im Bereich von 9 mm bis 20 mm oder im Bereich von 10 mm bis 15 mm Bevorzugt werden durch den Abstand zwischen den Platten jeweils durchströmbare Zwischenräume gebildet, welche jeweils ausschließlich von einem der jeweiligen Fluide durchströmt werden.

Die Platten sind gemäß einer vorteilhaften Ausgestaltung aus einem Material ausgebildet, welches Nickel aufweist, so dass die Widerstandsfähigkeit der Platten gegenüber einer Nitrierung, insbesondere bei einer Temperatur oberhalb von 400°C, erhöht wird. Bevorzugt ist der Gehalt an Nickel in dem Material der Platten größer als 30 Gew.-%, besonders bevorzugt größer als 35% Gew-%, beispielsweise größer als 40 Gew.-%.

Bevorzugt weisen die einzelnen Platten ein Muster auf, welches die Wärmeübertragung jeweils verbessert bzw. die Strömungsverteilung entlang der Platten vergleichmäßigt. Dazu können die Platten beispielsweise eine geriffelte Oberfläche aufweisen, wodurch die Oberfläche der einzelnen Platten vergrößert wird. Des Weiteren kann ein wellenförmiges Profil einer Platte als eine Stütze der benachbarten Platten dienen und dadurch die gesamte Stabilität des Wärmetauschers erhöhen.

Bevorzugt sind die durchströmbaren Zwischenräume einer ersten Gruppe in Fluidverbindung mit einem gemeinsamen, senkrecht zu den Platten verlaufenden ersten Fluidkanal. Bevorzugt ist der Fluidkanal zu den Zwischenräumen einer zweiten Gruppe hin abgedichtet. Bevorzugt liegt der Durchmesser des ersten Fluidkanals im Bereich von 10 cm bis 60 cm, bevorzugter im Bereich von 15 cm bis 50 cm, im Bereich von 20 cm bis 40 cm, im Bereich von 25 cm bis 35 cm oder im Bereich von 30 cm bis 40 cm. Bevorzugt ist der erste Fluidkanal so ausgelegt, dass er den ganzen Plattenwärmetauscher durchdringt, jedoch an einer der beiden Enden abgedichtet sein kann. Bevorzugt ist der erste Fluidkanal zentral entlang der Längsachse des Plattenwärmetauschers angeordnet, so dass der erste Fluidkanal jeweils durch die geometrischen Mittelpunkte der einzelnen Platten verläuft. Bevorzugt ist der erste Kanal dazu konfiguriert, ein erstes Fluid in den Plattenwärmetauscher einzuleiten oder aus diesem auszuleiten.

Bevorzugt stehen durchströmbare Zwischenräume einer zweiten Gruppe mit der Umgebung des Plattenwärmetauschers in Fluidverbindung und sind zu den Zwischenräumen der ersten Gruppe und bevorzugt auch zum ersten Fluidkanal hin abgedichtet.

Bevorzugt werden die durchströmbaren Zwischenräume der ersten Gruppe von einem ersten Fluid und die durchströmbaren Zwischenräume der zweiten Gruppe von einem zweiten Fluid durchströmt. Das erste Fluid und das zweite Fluid stehen bevorzugt miteinander in Fluidverbindung, wobei das erste Fluid bevorzugt das Fluid vor Durchströmen des Katalysatorbettes umfasst und das zweite Fluid bevorzugt das Fluid nach Durchströmen des Katalysatorbettes umfasst. Bevorzugt ist das zweite Fluid wärmer als das erste Fluid, so dass eine Wärmeübertragung vom zweiten auf das erste Fluid stattfindet.

Bevorzugt sind die Zwischenräume der ersten Gruppe und die Zwischenräume der zweiten Gruppe jeweils abwechselnd angeordnet. Dementsprechend werden die Zwischenräume bevorzugt abwechselnd vom ersten, bevorzugt *"kälteren"* Fluid, und vom zweiten, bevorzugt *"wärmeren"* Fluid durchströmt.

Bevorzugt weisen die einzelnen Platten jeweils eine runde Form auf. Beispielsweise können die Platten kreisförmig ausgebildet sein. Bevorzugt liegt der Durchmesser der einzelnen Platten im Bereich von 50 cm bis 250 cm, bevorzugter im Bereich von 75 cm bis 225 cm oder im Bereich von 100 cm bis 200 cm. Die runde Form der Platten ist besonders vorteilhaft, da bei einer hohlzylindrischen Form der Katalysatorbetten ein Plattenwärmetauscher mit runden Platten besonders leicht in den Innenraum der hohlzylindrischen Katalysatorbetten eingebaut werden kann und eine symmetrische Anordnung die angestrebte gleichmäßige Strömungsverteilung begünstigt.

Bevorzugt haben die Zwischenräume der zweiten Gruppe seitliche Einströmöffnungen, um ein Einströmen eines Fluids in die Zwischenräume der zweiten Gruppe hinein zu ermöglichen. Bevorzugt strömt über die seitlichen Einströmöffnungen das zweite, *"wärmere"* Fluid in die Zwischenräume der zweiten Gruppe. Bevorzugt sind die seitlichen Einströmöffnungen in unmittelbarer Nachbarschaft zu den Katalysatorbetten angeordnet, so dass das zweite, *"wärmere"* Fluid unmittelbar nach dem Ausströmen aus dem Katalysatorbett in den Plattenwärmetauscher einströmen kann. Damit können ggf. notwendige Rohrleitungen, in welchen das aus dem Katalysatorbett ausströmende Fluid gesammelt und zum Plattenwärmetauscher geleitet wird, entfallen.

In einer bevorzugten Ausführungsform stehen die Zwischenräume der ersten Gruppe in Fluidverbindung mit mehreren, senkrecht zu den Platten verlaufenden zweiten Fluidkanälen, die derart angeordnet sind, dass ein Fluid die Zwischenräume der ersten Gruppe, ausgehend von dem ersten Fluidkanal, radial zu den zweiten Fluidkanälen durchströmt, oder dass ein Fluid die Zwischenräume der ersten Gruppe, ausgehend von den zweiten Fluidkanälen radial zu dem ersten Fluidkanal durchströmt.

Bevorzugt stehen die zweiten Fluidkanäle über die Zwischenräume der ersten Gruppe in Fluidverbindung untereinander und mit dem ersten Fluidkanal. Bevorzugt sind die zweiten Fluidkanäle alle parallel zueinander und zum ersten Fluidkanal hin ausgerichtet. Bevorzugt weisen die zweiten Fluidkanäle alle die gleiche Form und die gleichen Abmessungen auf, z.B. den gleichen Durchmesser im Fall eines runden Querschnitts. Bevorzugt liegt der Durchmesser der zweiten Fluidkanäle, im Fall eines runden Querschnitts, im Bereich von 1 cm bis 25 cm, bevorzugter im Bereich 2 cm bis 20 cm, im Bereich von 3 cm bis 19 cm oder im Bereich von 4 cm bis 18 cm. Bevorzugt umfasst der Plattenwärmetauscher mindestens 4 zweite Fluidkanäle, bevorzugter mindestens 8, noch bevorzugter mindestens 12, noch bevorzugter mindestens 16, bevorzugter mindestens 20 oder mindestens 24. Die zweiten Fluidkanäle sind bevorzugt am äußeren Rand des Plattenwärmetauschers angeordnet. Der Abstand zwischen den Längsachsen der zweiten Fluidkanäle im Fall eines runden Querschnitts bzw. den Mittelpunkten der zweiten Fluidkanäle im Fall eines komplizierteren Querschnitts und dem seitlichen Rand des Plattenwärmetauschers ist bevorzugt bei allen zweiten Fluidkanälen gleich groß und liegt im Bereich von 0,5 bis 5 cm, bevorzugter im Bereich von 1 bis 3 cm. Bevorzugt strömt ein Fluid, bevorzugt das *"kältere"* Fluid, über den ersten Fluidkanal in den Plattenwärmetauscher, durchströmt die Zwischenräume der ersten Gruppe radial vom ersten Fluidkanal zu den zweiten Fluidkanälen, also bevorzugt radial von innen nach außen, und verlässt den Plattenwärmetauscher über die zweiten Fluidkanäle. Man spricht bei dieser Anordnung von der "Gegenstrom-Wärmeübertragung". In einer anderen bevorzugten Ausführungsform strömt ein Fluid, bevorzugt das *"kältere"* Fluid, über die zweiten Fluidkanäle in den Plattenwärmetauscher, durchströmt die Zwischenräume der ersten Gruppe radial von den zweiten Fluidkanälen zum ersten Fluidkanal, also bevorzugt von außen nach innen, und verlässt den Plattenwärmetauscher über den ersten Fluidkanal. Man spricht bei dieser Anordnung von der "Gleichstrom-Wärmeübertragung".

Bevorzugt stehen die Zwischenräume der zweiten Gruppe in Fluidverbindung mit mehreren, senkrecht zu den Platten verlaufenden dritten Fluidkanälen, die derart angeordnet sind, dass das Fluid die Zwischenräume der zweiten Gruppe, ausgehend von den seitlichen Einströmöffnungen, radial zu den dritten Fluidkanälen durchströmt.

Bevorzugt stehen die dritten Fluidkanäle über die Zwischenräume der zweiten Gruppe in Fluidverbindung untereinander und mit den Einströmöffnungen. Bevorzugt sind die dritten Fluidkanäle alle parallel zueinander sowie zum ersten Fluidkanal und zu den zweiten Fluidkanälen hin ausgerichtet. Bevorzugt weisen die dritten Fluidkanäle alle die gleiche Form und die gleichen Abmessungen auf, z.B. den gleichen Durchmesser im Fall eines runden Querschnitts. Bevorzugt liegt der Durchmesser der dritten Fluidkanäle im Bereich von 5 cm bis 20 cm, bevorzugter im Bereich von 6 cm bis 19 cm, im Bereich von 7 cm bis 18 cm, im Bereich von 8 cm bis 18 cm, im Bereich von 10 cm bis 18 cm oder im Bereich von 12 cm bis 16 cm. Bevorzugt umfasst der Plattenwärmetauscher mindestens 4 dritte Fluidkanäle, bevorzugter mindestens 6, mindestens 8, mindestens 10, mindestens 12 oder mindestens 16. Wenn der erste Fluidkanal entlang der zentralen Längsachse des Plattenwärmetauschers angeordnet ist, sind die dritten Fluidkanäle bevorzugt am inneren Rand des Plattenwärmetauschers um den ersten Fluidkanal herum angeordnet. Der minimale Abstand zwischen den dritten Fluidkanälen und dem ersten Fluidkanal ist dann bevorzugt bei allen dritten Fluidkanälen gleich groß und liegt bevorzugt im Bereich von 0,5 cm bis 5 cm, bevorzugter im Bereich von 1 cm bis 3 cm. Bevorzugt strömt ein Fluid, bevorzugt das *"wärmere"* Fluid, über die seitlichen Einströmöffnungen in die Zwischenräume der zweiten Gruppe, durchströmt diese bevorzugt radial von außen nach innen, und verlässt den Plattenwärmetauscher über die dritten Fluidkanäle.

Bevorzugt weisen der erste Fluidkanal und/oder die zweiten Fluidkanäle und/oder die dritten Fluidkanäle einen kreisrunden Querschnitt auf. Besonders bevorzugt sind die Durchmesser der dritten Fluidkanäle größer als die Durchmesser der zweiten Fluidkanäle. Das Verhältnis der Durchmesser der dritten Fluidkanäle zum Durchmesser der zweiten Fluidkanäle liegt bevorzugt im Bereich von 2:1 bis 1,1:1, bevorzugter im Bereich von 1,5:1 bis 1,1:1. Alternativ weisen die zweiten Fluidkanäle und/oder die dritten Fluidkanäle einen ovalen oder V-förmigen Querschnitt auf. In dem Fall, dass die die zweiten und die dritten Fluidkanäle einen ovalen oder V-förmigen Querschnitt aufweisen, liegt das Verhältnis der Fläche des Kanalquerschnitts der dritten Fluidkanäle zu der der zweiten Fluidkanäle bevorzugt im Bereich von 4:1 bis 1,2:1, bevorzugter im Bereich von 2,3:1 bis 1,2:1.

Die für eine Ammoniak-Synthese erforderlichen Bedingungen von hohen Volumenströmen bedingen bei möglichst geringen Platzverhältnissen innerhalb eines Plattenwärmetauschers ggf. hohe Geschwindigkeiten der Fluide, was ggf. zu hohen Druckverlusten innerhalb der Zuleitungsrohre führen kann.

Bevorzugt sind die Abmessungen der Zwischenräume derart beschaffen, dass der Druckverlust der Fluide beim Durchströmen des Plattenwärmetauschers höchstens 4 bar beträgt, bevorzugter höchstens 3 bar, 2 bar, 1 bar oder 0,5 bar.

Bevorzugt beträgt der Druckunterschied zwischen zwei Fluiden, welche durch den Plattenwärmetauscher strömen, höchstens 5 bar, bevorzugter höchstens 4 bar, 3 bar, 2 bar oder höchstens 1 bar.

Ein zweiter Aspekt der Erfindung betrifft ein Verfahren zur Herstellung eines Produkts, wobei das Verfahren die folgenden Schritte umfasst:
a) Bereitstellen eines Eduktstroms umfassend Reaktanden und ggf. inerte Komponenten und ggf. Produkt;
b) Einleiten des Eduktstroms in einen Druckbehälter;
c) Vorwärmen des Eduktstroms in einem Wärmetauscher, der im Strömungsweg des Eduktstroms zwischen einem Einlass des Druckbehälters und einem Katalysatorbett angeordnet ist;
d) Weiterleiten des vorgewärmten Eduktstroms auf das Katalysatorbett;
e) Umsetzen zumindest eines Teils der Reaktanden des Eduktstroms auf dem Katalysatorbett unter Bildung eines Produktstroms, umfassend Reaktanden und Produkt und ggf. Inerten; und
f) Einleiten des Produktstroms in den Wärmetauscher, wobei der Produktstrom abgekühlt wird;
wobei der Wärmetauscher als Plattenwärmetauscher ausgebildet ist und die Umsetzung der Reaktanden in dem mindestens einen Katalysatorbett unter adiabater Verfahrensführung erfolgt und der Eduktstrom Wasserstoff, Stickstoff und gegebenenfalls Inerte umfasst und der Produktstrom Ammoniak umfasst.

Alle bevorzugten Ausführungsformen, welche vorstehend im Zusammenhang mit der erfindungsgemäßen Synthesevorrichtung beschrieben worden sind, gelten analog auch für das erfindungsgemäße Verfahren zur Herstellung von Ammoniak und werden daher nicht wiederholt.

Das erfindungsgemäße Verfahren ist eine exotherme Reaktion mit heterogener Katalyse.

In Schritt (a) des erfindungsgemäßen Verfahrens wird ein Eduktstrom bevorzugt kontinuierlich bereitgestellt. Bevorzugt umfasst der Eduktstrom flüssige und/oder gasförmige Komponenten. Inerte Komponenten umfassen dabei solche Komponenten, welche in dem jeweiligen Verfahren inert sind. Bevorzugt umfasst der Eduktstrom Wasserstoff und Stickstoff. Zusätzlich kann der Eduktstrom als inerte Komponenten beispielsweise Methan sowie ggf. Argonund/oder ggf. Helium und als Produkt Ammoniak umfassen. Bevorzugt umfasst der Eduktstrom Wasserstoff und Stickstoff im molaren Verhältnis von 3:1. Bevorzugt beträgt der Druck des Eduktstroms im Bereich von 90 bis 400 bar.

In Schritt (b) des erfindungsgemäßen Verfahrens wird der Eduktstrom in einen Druckbehälter eingeleitet.. Bevorzugt wird der Edukstrom über einen Einlass in den Druckbehälter eingeleitet, welcher bevorzugt am oberen Ende des Druckbehälters angeordnet ist.

In Schritt (c) des erfindungsgemäßen Verfahrens wird der Eduktstrom in einem Wärmetauscher vorgewärmt. Bevorzugt wird der Eduktstrom auf eine Temperatur von mindestens 300°C vorgewärmt, bevorzugter auf eine Temperatur von mindestens 320°C, mindestens 340°C, mindestens 360°C, mindestens 370°C, mindestens 380°C oder mindestens 400°C. Der Wärmetauscher ist im Strömungsweg des Eduktstroms zwischen dem Einlass des Druckbehälters und einem Katalysatorbett angeordnet und befindet sich nicht innerhalb des Katalysatorbettes.

In Schritt (d) wird der vorgewärmte Eduktstrom auf das Katalysatorbett weitergeleitet.

In Schritt (e) wird zumindest ein Teil der Reaktanden unter Bildung eines Produktstroms umfassend Reaktanden, Produkt und ggf. inerte Komponenten umgesetzt. Bevorzugt ist der Produktstrom unmittelbar nach der Umsetzung wärmer als der Eduktstrom unmittelbar vor der Umsetzung. Dies kann beispielsweise dadurch bedingt sein, dass die zugrunde liegende Umsetzung exotherm verläuft. Bevorzugt liegt die Temperatur des Produktstroms unmittelbar nach der Umsetzung im Bereich von 420°C bis 550°C. Bevorzugt liegt die Temperaturdifferenz zwischen Eduktstrom und Produktstrom unmittelbar nach der Umsetzung im Bereich von 50°C bis 400°C. Der Produktstrom umfasst bevorzugt Ammoniak sowie Reaktanden. Der Eduktstrom umfasst Wasserstoff und Stickstoff sowie ggf. inerte Komponenten und der Produktstrom Ammoniak, Wasserstoff und Stickstoff sowie ggf. inerte Komponenten.

In Schritt (f) des erfindungsgemäßen Verfahrens wird der Produktstrom in dem Wärmetauscher abgekühlt. Der Produktstrom in Schritt (f) wird in demselben Wärmetauscher abgekühlt, in welchem der Eduktstrom in Schritt (c) vorgewärmt wird. Bevorzugt wird der Produktstrom derart abgekühlt, dass die Temperatur des Produktstroms nach dem Abkühlen höchstens 450°C beträgt, bevorzugter höchstens 400°C, höchstens 350°C, oder höchstens 300°C.

Der Wärmetauscher ist als Plattenwärmetauscher ausgebildet. Der Wärmetauscher kann dabei sowohl im Gleich- als auch im Gegenstrom von dem Edukt- und Produktstrom durchströmt werden.

Bevorzugt wird der Wärmetauscher im Gegenstrom durchströmt. Bevorzugt strömt dann der Eduktstrom als *"kälteres"* Fluid über den ersten Fluidkanal in den Plattenwärmetauscher, durchströmt die Zwischenräume der ersten Gruppe radial vom ersten Fluidkanal zu den zweiten Fluidkanälen, also bevorzugt von innen nach außen, und verlässt den Plattenwärmetauscher bevorzugt über die zweiten Fluidkanäle. Bevorzugt strömt der Produktstrom als *"wärmeres"* Fluid über die seitlichen Einströmöffnungen in die Zwischenräume der zweiten Gruppe, durchströmt diese bevorzugt radial von außen nach innen, und verlässt den Plattenwärmetauscher über die dritten Fluidkanäle.

In einer anderen bevorzugten Ausführungsform ist der Wärmetauscher als Plattenwärmetauscher ausgebildet und wird im Gleichstrom durchströmt. Bevorzugt strömt dann der Eduktstrom als *"kälteres"* Fluid über die zweiten Fluidkanäle in den Plattenwärmetauscher, durchströmt die Zwischenräume der ersten Gruppe radial von den zweiten Fluidkanälen zu dem ersten Fluidkanal, also bevorzugt radial von außen nach innen, und verlässt den Plattenwärmetauscher über den ersten Fluidkanal. Bevorzugt strömt der Produktstrom als *"wärmeres"* Fluid über die seitlichen Einströmöffnungen in die Zwischenräume der zweiten Gruppe, durchströmt diese bevorzugt radial von außen nach innen, und verlässt den Plattenwärmetauscher über die dritten Fluidkanäle.

Bedingt durch die spezifischen Gegebenheiten bei einer Ammoniak-Synthese ist eine Begrenzung der Plattentemperaturen auf einen Bereich deutlich unterhalb der Gasaustrittstemperaturen aus den Katalysatorbetten wünschenswert. Dabei liegen die Gasaustrittstemperaturen aus den Katalysatorbetten bei einer Ammoniak-Synthese typischerweise im Bereich von 420°C bis 550°C. Bevorzugt wird daher der erfindungsgemäße Plattenwärmetauscher bei einer Ammoniak-Synthese im Gleichstrom durchströmt, um die Plattentemperatur gering zu halten.

Bevorzugt umfasst das erfindungsgemäße Verfahren die folgenden zusätzlichen Schritte:
g) Einleiten des Produktstroms in mindestens ein weiteres Katalysatorbett;
h) Umsetzen zumindest eines Teils der Reaktanden des Produktstroms in dem weiteren Katalysatorbett unter Bildung eines weiteren Produktstroms umfassend Reaktanden und Produkt und ggf. Inerte.

Bevorzugt wird in Schritt (g) der Produktstrom nach dem Durchströmen des ersten Wärmetauschers in ein weiteres Katalysatorbett eingeleitet.

Bevorzugt wird in Schritt (h) zumindest ein Teil der Reaktanden des Produktstroms unter Bildung eines weiteren Produktstroms umfassend Reaktanden, Produkt und ggf. inerte Komponenten umgesetzt. Bevorzugt ist der weitere Produktstrom unmittelbar nach der Umsetzung wärmer als der Produktstrom unmittelbar vor der Umsetzung. Dies kann beispielsweise dadurch bedingt sein, dass die zugrunde liegende Umsetzung exotherm verläuft. Bevorzugt liegt die Temperatur des weiteren Produktstroms unmittelbar nach der Umsetzung im Bereich von 420°C bis 550°C. Bevorzugt liegt die Temperaturdifferenz zwischen Produktstrom unmittelbar vor der Umsetzung und dem weiteren Produktstrom unmittelbar nach der Umsetzung im Bereich von 50°C bis 400°C. Der weitere Produktstrom umfasst bevorzugt Ammoniak sowie Wasserstoff, Stickstoff und ggf. inerte Komponenten wie beispielsweise Argon, Methan und ggf. Helium.

In einer bevorzugten Ausführungsform werden die Schritte (g) und (h) mindestens einmal wiederholt. Werden die Schritte (g) und (h) wiederholt, durchströmt der weitere Produktstrom vor dem weiteren Katalysatorbett einen weiteren Wärmetauscher, welcher bevorzugt ein Spiralwärmetauscher oder ein Plattenwärmetauscher ist.

Die erfindungsgemäße Vorrichtung ist besonders geeignet zur Durchführung des erfindungsgemäßen Verfahrens. Ein weiterer Aspekt der Erfindung betrifft daher die Verwendung der erfindungsgemäßen Vorrichtung in dem erfindungsgemäßen Verfahren.
Figur 1 zeigt einen Plattenwärmetauscher gemäß einem Ausführungsbeispiel in einer Schnittdarstellung entlang einer zu den Platten des Plattenwärmetauschers parallel ausgerichteten Schnittebene.
Fig. 2a zeigt den Plattenwärmetauscher nach Figur 1 in einer schematischen, Schnittdarstellung entlang einer zu den Platten des Plattenwärmetauschers senkrecht ausgerichteten Schnittebene zur Veranschaulichung einer Strömungsführung gemäß dem Gegenstromprinzip.
Fig. 2b zeigt den Plattenwärmetauscher nach Figur 1 in einer schematischen, Schnittdarstellung entlang einer zu den Platten des Plattenwärmetauschers senkrecht ausgerichteten Schnittebene zur Veranschaulichung einer Strömungsführung gemäß dem Gleichstromprinzip.
Figur 3 zeigt mehrere Synthesevorrichtungen mit Wärmetauschern zur Veranschaulichung unterschiedlicher Einbausituationen von Wärmetauschern.
Figur 4 zeigt die Strömungsführung innerhalb einer Synthesevorrichtung mit einem Wärmetauscher, welcher auf der Außenseite des Katalysatorbettes angeordnet ist.
Figur 5 zeigt die Strömungsführung innerhalb einer Synthesevorrichtung mit einem Wärmetauscher, welcher oberhalb des Katalysatorbettes angeordnet ist.

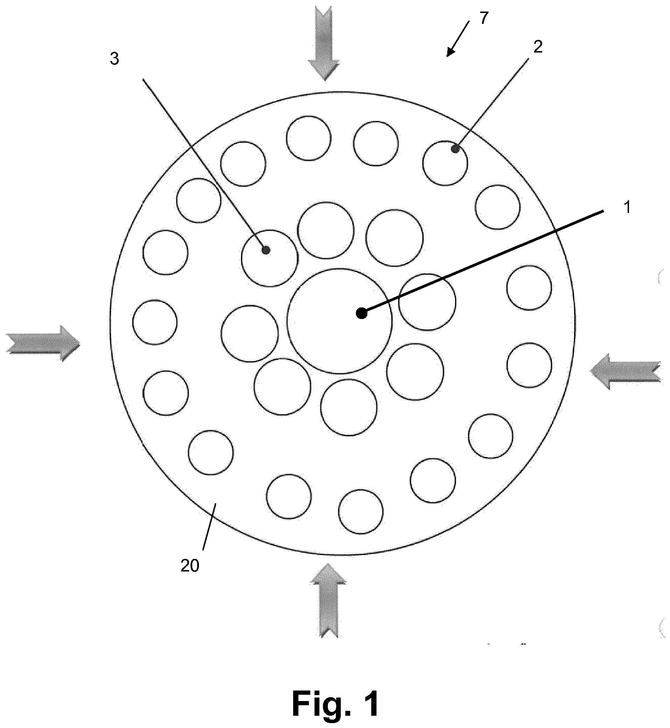

In Fig. 1 ist ein Plattenwärmetauscher 7 gemäß einem Ausführungsbeispiel der Erfindung gezeigt. Der Plattenwärmetauscher 7 weist einen ersten Fluidkanal 1 auf, welcher zentral entlang der Längsachse des Plattenwärmetauschers 7 senkrecht zu den einzelnen Platten 20 des Plattenwärmetauschers 7 angeordnet ist. Der erste Fluidkanal 1 weist einen kreisförmigen Querschnitt auf. Weiterhin sind bei dem Plattenwärmetauscher zweite 2 und dritte 3 Fluidkanäle vorgesehen. Die zweiten 2 und dritten 3 Fluidkanäle verlaufen senkrecht zu den Platten 20 und sind parallel zueinander ausgerichtet. Bevorzugt sind die zweiten Fluidkanäle 2 im Bereich des Außenrands der Platten 20 des Plattenwärmetauschers 7 angeordnet. Die dritten Fluidkanäle 3 sind bevorzugt um den ersten Fluidkanal 1 herum angeordnet. Die zweiten Fluidkanäle 2 und die dritten Fluidkanäle 3 sind jeweils auf einem Kreisbogen angeordnet, dessen Mittelpunkt mit einer Längsachse des ersten Fluidkanals 1 zusammenfällt. Der Querschnitt der zweiten Fluidkanäle 2 und der dritten Fluidkanäle 3 ist kreisförmig ausgebildet. Abweichend davon, kann der Querschnitt der zweiten Fluidkanäle 2 und der dritten Fluidkanäle 3 oval oder V-förmig ausgestaltet sein.

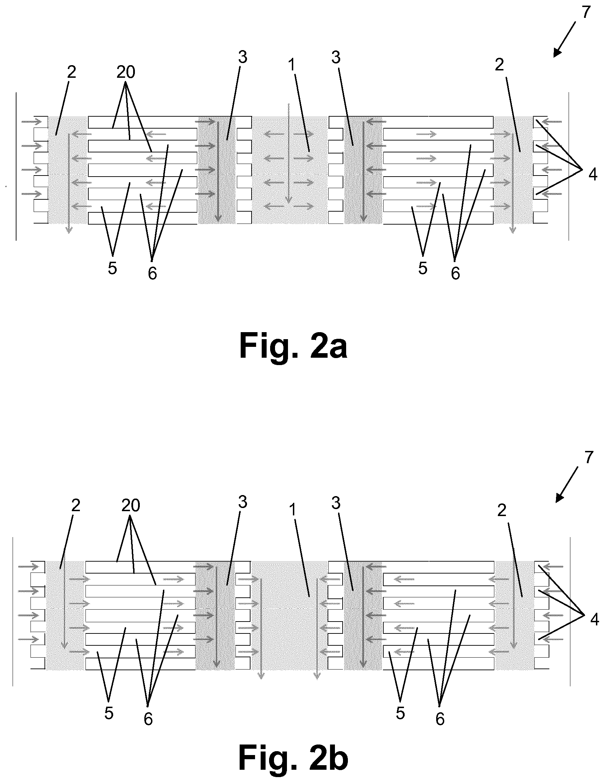

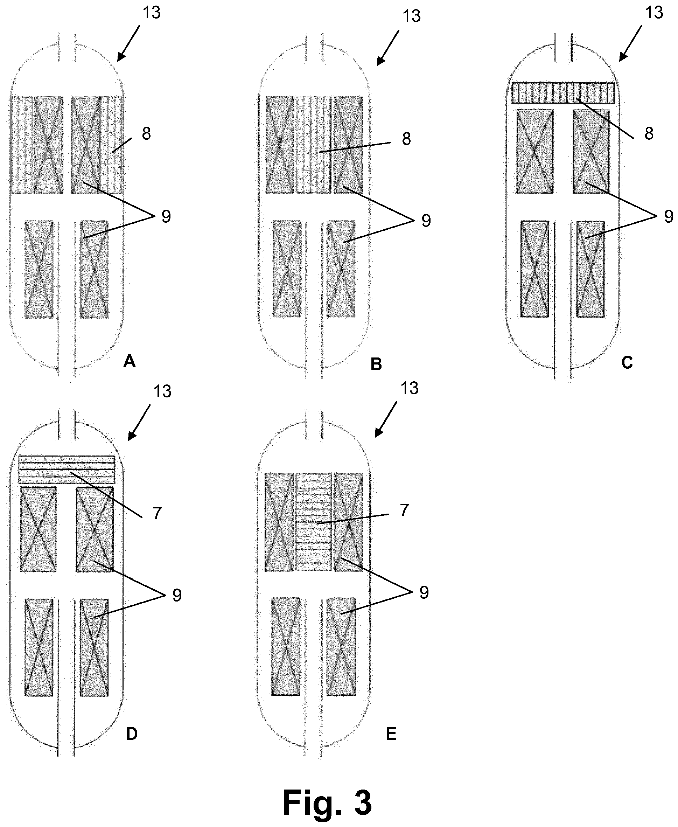

Die Strömungsverhältnisse innerhalb des Plattenwärmetauschers 7 sollen nachfolgend anhand der Darstellungen in Fig. 2a und Fig. 2b erläutert werden, wobei Fig. 2 einen Betrieb des Plattenwärmetauschers gemäß dem Gegenstromprinzip und Fig. 3 einen Betrieb gemäß dem Gleichstromprinzip zeigt. Zwischen den einzelnen Platten 20 sind durchströmbare Zwischenräume angeordnet, welche für die folgende Betrachtung in eine erste Gruppe 5 und eine zweite Gruppe 6 eingeteilt werden, wobei benachbarte Zwischenräume jeweils unterschiedlichen Gruppen 5, 6 angehören. Die durchströmbaren Zwischenräume der ersten Gruppe 5 stehen in Fluidverbindung mit dem ersten Fluidkanal 1 und sind zur Umgebung des Plattenwärmetauschers 7 hin abgedichtet. Insofern wird ein Einströmen und/oder Ausströmen eines ersten Fluids aus den Zwischenräumen der ersten Gruppe 5 in einer Richtung parallel zu den Platten 20 verhindert Die durchströmbaren Zwischenräume der zweiten Gruppe 6 stehen mit der Umgebung des Plattenwärmetauschers 7 in Fluidverbindung und sind zu den Zwischenräumen der ersten Gruppe 5 hin abgedichtet. Um ein Einströmen eines zweiten Fluids in die Zwischenräume der zweiten Gruppe 6 aus einer parallel zu den Platten 20 angeordneten Einströmrichtung zu ermöglichen weist der Plattenwärmetauscher 7 seitliche Einströmöffnungen 4 auf.

In Fig. 2a ist die Strömungsführung innerhalb des Plattenwärmetauschers 7 skizziert, wobei der Plattenwärmetauscher 7 im Gegenstrom betrieben wird. Ein erstes Fluid strömt dabei über den ersten Fluidkanal 1 in den Plattenwärmetauscher 7, durchströmt die Zwischenräume der ersten Gruppe 5 radial vom ersten Fluidkanal 1 zu den zweiten Fluidkanälen 2, also von innen nach außen, und verlässt den Plattenwärmetauscher 7 über die zweiten Fluidkanäle 2. Die Zwischenräume der ersten Gruppe 5 sind dabei über den ersten Fluidkanal 1 nach Art einer Parallelschaltung verbunden, so dass sich der in dem ersten Fluidkanal 1 geführte Strom des ersten Fluids in mehrere Teilströme aufteilt. Ein zweites Fluid strömt über die seitlichen Einströmöffnungen 4 in die Zwischenräume der zweiten Gruppe 6, durchströmt diese radial von außen nach innen, und verlässt den Plattenwärmetauscher 7 über die dritten Fluidkanäle 3. Auch die Zwischenräume der zweiten Gruppe 6 sind über die dritten Fluidkanäle 3 nach Art einer Parallelschaltung verbunden, so dass das zweite Fluid aus verschiedenen Zwischenräumen der zweiten Gruppe 6 in die gemeinsamen dritten Fluidkanäle 3 geleitet wird.

In Fig. 2b ist die Strömungsführung innerhalb des Plattenwärmetauschers 7 skizziert, wobei der Plattenwärmetauscher 7 im Gleichstrom betrieben wird. Im Gleichstrombetrieb strömt das erste Fluid strömt dabei über die zweiten Fluidkanäle 2 in den Plattenwärmetauscher 7, durchströmt die Zwischenräume der ersten Gruppe 5 radial von den zweiten Fluidkanäle zu dem ersten Fluidkanal 1, also von außen nach innen, und verlässt den Plattenwärmetauscher 7 über den ersten Fluidkanal 1. Die Zwischenräume der ersten Gruppe 5 sind dabei über den ersten Fluidkanal 1 nach Art einer Parallelschaltung verbunden. Das zweites Fluid strömt über die seitlichen Einströmöffnungen 4 in die Zwischenräume der zweiten Gruppe 6, durchströmt diese radial von außen nach innen, und verlässt den Plattenwärmetauscher 7 über die dritten Fluidkanäle 3. Auch die Zwischenräume der zweiten Gruppe 6 sind über die dritten Fluidkanäle 3 nach Art einer Parallelschaltung verbunden.

In Fig. 3 sind mögliche Anordnungen von Wärmetauschern 7, 8 in einer Synthesevorrichtung 13, insbesondere einem Ammoniak-Synthesekonverter, gezeigt. Dabei sind die Katalysatorbetten 9 der Synthesevorrichtung 13 zylinderringförmig, d.h. hohlzylindrisch, ausgebildet. Das nicht erfindungsgemäße Beispiel A zeigt eine Synthesevorrichtung 13 mit einem Wärmetauscher 8, welcher an der Außenseite der hohlzylindrischen Katalysatorbetten 9 angeordnet ist. Das erfindungsgemäße Beispiel B zeigt eine Synthesevorrichtung 13 mit einem Wärmetauscher 8, welcher an der Innenseite eines hohlzylindrischen Katalysatorbetts 9 angeordnet ist. In dem nicht erfindungsgemäßen Beispiel C ist eine Synthesevorrichtung 13 mit einem Wärmetauscher 8 gezeigt, der oberhalb eines Katalysatorbetts 9 angeordnet ist. Bei Synthesevorrichtungen mit drei axial übereinander angeordneten Katalysatorbetten besteht darüber hinaus die Möglichkeit, einen Wärmetauscher 8 zwischen zwei Katalysatorbetten 9 anzuordnen. Bei einer derartigen Ausgestaltung ist im Hinblick auf die hohen Druckverluste bevorzugt eine Parallelschaltung der Strömungswege vorzusehen, z.B. durch eine Ausgestaltung des Wärmetauschers 8 mit einer mehrgängigen Spirale. Das nicht erfindungsgemäße Beispiel D zeigt eine Synthesevorrichtung 13 mit einem Plattenwärmetauscher 7, welcher oberhalb des Katalysatorbettes 9 angeordnet ist. Das erfindungsgemäße Beispiel E zeigt eine Synthesevorrichtung mit einem Plattenwärmetauscher 7, welcher an der Innenseite des hohlzylindrischen Katalysatorbettes 9 angeordnet ist.

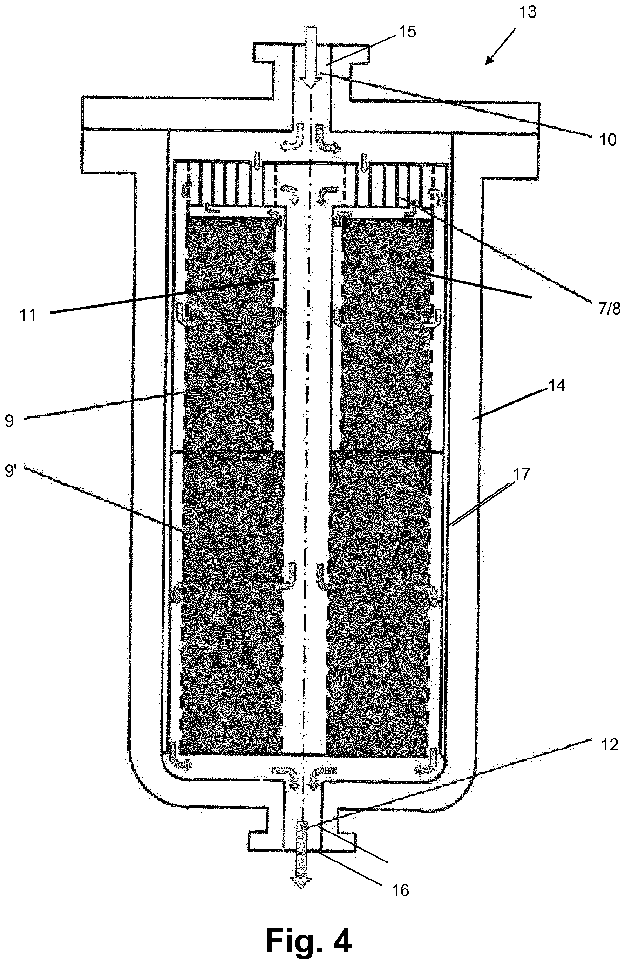

Fig. 4 zeigt exemplarisch eine Synthesevorrichtung 13 mit zwei axial übereinanderliegenden Katalysatorbetten 9, 9' und einem als Plattenwärmetauscher 7 ausgebildeten Wärmetauscher, welcher oberhalb des Katalysatorbettes 9 angeordnet ist. Der durch den Einlass in den Druckbehälter eingeleitete Eduktstrom 10 strömt in den Wärmetauscher 7, 8, wird anschließend über eine Mantelfläche des Einsatzes 17 zwischen der Innenseite des Druckbehälters 14 und der Außenseite des ersten Katalysatorbettes 9 weitergeleitet und durchströmt das erste Katalysatorbett 9 radial von außen nach innen. Der heiße Produktstrom 11 strömt an der Innenseite des ersten Katalysatorbettes 9 entlang in den Wärmetauscher 7, 8 und wird dort abgekühlt. Der auf diese Weise abgekühlte Produktstrom 11 wird in ein zweites Katalysatorbett 9' geleitet und durchströmt dieses radial von innen nach außen. Der so gebildete weitere Produktstrom 12 wird anschließend durch einen im unteren Bereich des Druckbehälters 14 angeordneten Auslass 16 aus der Synthesevorrichtung 13 herausgeleitet.

In den vorstehenden Figuren wurden Synthesevorrichtungen 13, insbesondere Ammoniaksynthesekonverter gezeigt, welche die folgenden Komponenten umfassen:
a) einen Druckbehälter 14, welcher einen Einlass 15 und einen Auslass 16 für ein Fluid umfasst;
b) mindestens ein Katalysatorbett 9, welches innerhalb des Druckbehälters 14 angeordnet ist;
c) mindestens einen Wärmetauscher 7, 8, wobei der Wärmetauscher 7, 8 im Strömungsweg des Fluids zwischen dem Einlass 15 des Druckbehälters 14 und dem Katalysatorbett 9 derart angeordnet ist, dass das in das Katalysatorbett 9 einströmende Fluid durch das aus dem Katalysatorbett 9 ausströmende Fluid erwärmt wird.
Die Wärmetauscher dieser Synthesevorrichtungen 13 sind als Plattenwärmetauscher 7, 8 ausgebildet. Der als Plattenwärmetauscher 7, 8 ausgebildete Wärmetauscher weist eine im Vergleich zu Rohrbündel-Wärmetauschern deutliche höhere Wärmestromdichte auf, wodurch sich eine erhöhte Wirtschaftlichkeit der Synthesevorrichtungen 13 ergibt.

### Bezugszeichenliste:

- 1: erster Fluidkanal
- 2: zweite Fluidkanäle
- 3: dritte Fluidkanäle
- 4: seitliche Einströmöffnungen
- 5: durchströmbare Zwischenräume der ersten Gruppe
- 6: durchströmbare Zwischenräume der zweiten Gruppe
- 7: Plattenwärmetauscher
- 8: Plattenwärmetauscher
- 9/9': Katalysatorbett
- 10: Eduktstrom
- 11: Produktstrom
- 12: weiterer Produktstrom
- 13: Synthesevorrichtung
- 14: Druckbehälter
- 15: Einlass
- 16: Auslass
- 17: Einsatz
- 20: Platte

## Patentansprüche

1. Synthesevorrichtung, insbesondere Synthesevorrichtung für exotherme Reaktionen mit heterogener Katalyse, wobei diese Synthesevorrichtung (13) die folgenden Komponenten umfasst:
a) einen Druckbehälter (14), welcher einen Einlass (15) und einen Auslass (16) für ein Fluid umfasst;
b) mindestens ein Katalysatorbett (9), welches innerhalb des Druckbehälters (14) angeordnet ist;
c) mindestens einen Wärmetauscher (7, 8), wobei der Wärmetauscher (7, 8) im Strömungsweg des Fluids zwischen dem Einlass (15) des Druckbehälters (14) und dem Katalysatorbett (9) derart angeordnet ist, dass das in das Katalysatorbett (9) einströmende Fluid durch das aus dem Katalysatorbett (9) ausströmende Fluid erwärmt wird;
wobei der Wärmetauscher (7) in der Synthesevorrichtung außerhalb des von dem Katalysatorbett (9) in dem Druckbehälter (14) eingenommenen Reaktorvolumens angeordnet ist, **dadurch gekennzeichnet, dass** der Wärmetauscher als Plattenwärmetauscher (7) ausgebildet ist und mindestens ein Katalysatorbett (9) zylinderringförmig oder hohlzylindrisch ausgebildet ist und der Plattenwärmetauscher (7) an der Innenseite des hohlzylindrischen Katalysatorbettes (9) so angeordnet ist, dass letzteres den Plattenwärmetauscher (7) konzentrisch umgibt.

2. Synthesevorrichtung gemäß Anspruch 1, **dadurch gekennzeichnet, dass** die Synthesevorrichtung (13) mehrere Wärmetauscher (7, 8) umfasst.

3. Synthesevorrichtung gemäß Anspruch 1 oder 2, **dadurch gekennzeichnet, dass** ein Plattenwärmetauscher (7, 8) unterhalb des Katalysatorbetts (9) angeordnet ist.

4. Synthesevorrichtung gemäß einem der Ansprüche 1 oder 2, **dadurch gekennzeichnet, dass** ein Plattenwärmetauscher (7, 8) im Bereich zwischen dem Katalysatorbett (9) und einer Innenwand des Druckbehälters (14) angeordnet ist.

5. Synthesevorrichtung gemäß einem der Ansprüche 1 bis 4, **dadurch gekennzeichnet, dass** die Synthesevorrichtung (13 mehrere Katalysatorbetten (9) umfasst, welche im Druckbehälter (14) vorzugsweise axial übereinander angeordnet sind.

6. Synthesevorrichtung gemäß einem der Ansprüche 1 bis 5, **dadurch gekennzeichnet, dass** der Plattenwärmetauscher (7) mehrere Platten (20) umfasst, wobei zwischen jeweils zwei benachbarten Platten (20) ein durchströmbarer Zwischenraum gebildet ist, und wobei
(i) durchströmbare Zwischenräume einer ersten Gruppe (5) in Fluidverbindung mit einem gemeinsamen, senkrecht zu den Platten verlaufenden ersten Fluidkanal (1) stehen und zur Umgebung des Plattenwärmetauschers (7) hin abgedichtet sind; und
(ii) durchströmbare Zwischenräume einer zweiten Gruppe (6) mit der Umgebung in Fluidverbindung stehen und zu den Zwischenräumen der ersten Gruppe (5) hin abgedichtet sind.

7. Synthesevorrichtung gemäß Anspruch 6, **dadurch gekennzeichnet, dass** die Zwischenräume der ersten Gruppe (5) und die Zwischenräume der zweiten Gruppe (6) jeweils abwechselnd angeordnet sind.

8. Synthesevorrichtung gemäß einem der Ansprüche 6 oder 7, **dadurch gekennzeichnet, dass** die einzelnen Platten (20) jeweils eine runde Form aufweisen.

9. Synthesevorrichtung gemäß einem der Ansprüche 6 bis 8, **dadurch gekennzeichnet, dass** die Zwischenräume der zweiten Gruppe (6) seitliche Einströmöffnungen (4) aufweisen, um ein Einströmen eines Fluids in die Zwischenräume der zweiten Gruppe (6) hinein zu ermöglichen.

10. Synthesevorrichtung gemäß einem der Ansprüche 6 bis 9, wobei die Zwischenräume der ersten Gruppe (5) in Fluidverbindung mit mehreren, senkrecht zu den Platten (20) verlaufenden zweiten Fluidkanälen (2) stehen, die derart angeordnet sind, dass ein Fluid die Zwischenräume der ersten Gruppe (5), ausgehend von dem ersten Fluidkanal (1), radial zu den zweiten Fluidkanälen (2) durchströmt, oder dass ein Fluid die Zwischenräume der ersten Gruppe (5), ausgehend von den zweiten Fluidkanälen (2) radial zu dem ersten Fluidkanal (1) durchströmt.

11. Synthesevorrichtung gemäß einem der Ansprüche 6 bis 10, wobei die Zwischenräume der zweiten Gruppe (6) in Fluidverbindung mit mehreren, senkrecht zu den Platten (20) verlaufenden dritten Fluidkanälen (3) stehen, die derart angeordnet sind, dass das Fluid die Zwischenräume der zweiten Gruppe (6), ausgehend von den seitlichen Einströmöffnungen (4), radial zu den dritten Fluidkanälen (3) durchströmt.

12. Verfahren zur Herstellung eines Produkts, wobei das Verfahren die folgenden Schritte umfasst:
a) Bereitstellen eines Eduktstroms (10) umfassend Reaktanden und ggf. inerte Komponenten sowie ggf. Produkt;
b) Einleiten des Eduktstroms (10) in einen Druckbehälter;
c) Vorwärmen des Eduktstroms (10) in einem Wärmetauscher, der im Strömungsweg des Eduktstroms (10) zwischen einem Einlass des Druckbehälters und mindestens einem Katalysatorbett (9) angeordnet ist;
d) Weiterleiten des vorgewärmten Eduktstroms (10) auf das Katalysatorbett (9);
e) Umsetzen zumindest eines Teils der Reaktanden des Eduktstroms (10) auf dem Katalysatorbett (9) unter Bildung eines Produktstroms (11), umfassend Reaktanden, Produkt und ggf. Inerte; und
f) Einleiten des Produktstroms (11) in den Wärmetauscher, wobei der Produktstrom (11) abgekühlt wird;
wobei der Wärmetauscher als Plattenwärmetauscher ausgebildet ist und die Umsetzung der Reaktanden in dem mindestens einen Katalysatorbett unter adiabater Verfahrensführung erfolgt, **dadurch gekennzeichnet, dass** der Eduktstrom (10) Wasserstoff, Stickstoff und ggf. Inerte umfasst und der Produktstrom (11) Ammoniak.

13. Verfahren gemäß Anspruch 12, **dadurch gekennzeichnet, dass** das Verfahren die folgenden zusätzlichen Schritte umfasst:
g) Einleiten des Produktstroms (11) in mindestens ein weiteres Katalysatorbett (9');
h) Umsetzen zumindest eines Teils der Reaktanden des Produktstroms (11) in dem weiteren Katalysatorbett (9') unter Bildung eines weiteren Produktstroms (12) umfassend Reaktanden und Produkt.

14. Verfahren nach Anspruch 12 oder 13, **dadurch gekennzeichnet, dass** es sich um eine exotherme Reaktion mit heterogener Katalyse handelt.

15. Verfahren gemäß einem der Ansprüche 12 bis 14, wobei der Eduktstrom (10) in Schritt (c) auf eine Temperatur von mindestens 300°C, bevorzugt mindestens 370 °C, besonders bevorzugt mindestens 380 °C, vorgewärmt wird.

16. Verwendung der Vorrichtung gemäß einem der Ansprüche 1 bis 11 in einem Verfahren gemäß einem der Ansprüche 12 bis 15.

## Claims

1. A synthesis device, more particularly a synthesis device for exothermic reactions with heterogeneous catalysis, this synthesis device (13) comprising the following components:
a) a pressure vessel (14) which comprises an inlet (15) and an outlet (16) for a fluid;
b) at least one catalyst bed (9) which is disposed within the pressure vessel (14);
c) at least one heat exchanger (7, 8), the heat exchanger (7, 8) being disposed in the flow path of the fluid between the inlet (15) of the pressure vessel (14) and the catalyst bed (9) in such a way that the fluid flowing into the catalyst bed (9) is heated by the fluid flowing out of the catalyst bed (9);
the heat exchanger (7) being disposed in the synthesis device outside the reactor volume occupied by the catalyst bed (9) in the pressure vessel (14), **characterized in that** the heat exchanger is configured as a plate heat exchanger (7) and at least one catalyst bed (9) has a cylinder ring form or hollow cylindrical configuration and the plate heat exchanger (7) is disposed on the inside of the hollow cylindrical catalyst bed (9) in such a way that the bed (9) surrounds the plate heat exchanger (7) concentrically.

2. The synthesis device as claimed in claim 1, **characterized in that** the synthesis device (13) comprises a plurality of heat exchangers (7, 8).

3. The synthesis device as claimed in claim 1 or 2, **characterized in that** one plate heat exchanger (7, 8) is disposed below the catalyst bed (9).

4. The synthesis device as claimed in either of claims 1 and 2, **characterized in that** one plate heat exchanger (7, 8) is disposed in the region between the catalyst bed (9) and an inner wall of the pressure vessel (14).

5. The synthesis device as claimed in any of claims 1 to 4, **characterized in that** the synthesis device (13) comprises a plurality of catalyst beds (9) which are disposed preferably axially over one another in the pressure vessel (14).

6. The synthesis device as claimed in any of claims 1 to 5, **characterized in that** the plate heat exchanger (7) comprises a plurality of plates (20), with a flow-traversible interspace being formed between pairs of adjacent plates (20), and with
(i) flow-traversible interspaces of a first group (5) being in fluid communication with a common first fluid channel (1) running perpendicularly to the plates, and being sealed off from the surroundings of the plate heat exchanger (7); and
(ii) flow-traversible interspaces of a second group (6) being in fluid communication with the surroundings and being sealed off from the interspaces of the first group (5).

7. The synthesis device as claimed in claim 6, **characterized in that** the interspaces of the first group (5) and the interspaces of the second group (6) are each disposed in alternation.

8. The synthesis device as claimed in either of claims 6 or 7, **characterized in that** the individual plates (20) each have a circular shape.

9. The synthesis device as claimed in any of claims 6 to 8, **characterized in that** the interspaces of the second group (6) have lateral inflow openings (4) to allow a fluid to flow into the interspaces of the second group (6).

10. The synthesis device as claimed in any of claims 6 to 9, wherein the interspaces of the first group (5) are in fluid communication with a plurality of second fluid channels (2) which run perpendicularly to the plates (20) and which are disposed in such a way that a fluid flows through the interspaces of the first group (5), starting from the first fluid channel (1), radially to the second fluid channels (2), or such that a fluid flows through the interspaces of the first group (5), starting from the second fluid channels (2), radially to the first fluid channel (1).

11. The synthesis device as claimed in any of claims 6 to 10, wherein the interspaces of the second group (6) are in fluid communication with a plurality of third fluid channels (3) which run perpendicular to the plates (20) and which are disposed in such a way that the fluid flows through the interspaces of the second group (6), starting from the lateral inflow openings (4), radially to the third fluid channels (3).

12. A method for producing a product, the method comprising the following steps:
a) providing a reactant stream (10) comprising reactants and optionally inert components and also optionally product;
b) introducing the reactant stream (10) into a pressure vessel;
c) preheating the reactant stream (10) in a heat exchanger which is disposed in the flow path of the reactant stream (10) between an inlet of the pressure vessel and at least one catalyst bed (9);
d) conveying the preheated reactant stream (10) onto the catalyst bed (9);
e) reacting at least a portion of the reactants of the reactant stream (10) on the catalyst bed (9) to form a product stream (11) comprising reactants, product, and optionally inerts; and
f) introducing the product stream (11) into the heat exchanger, the product stream (11) being cooled;
the heat exchanger being configured as a plate heat exchanger and the reaction of the reactants taking place in the at least one catalyst bed under an adiabatic regime, **characterized in that** the reactant stream (10) comprises hydrogen, nitrogen, and optionally inerts, and the product stream (11) comprises ammonia.

13. The method as claimed in claim 12, **characterized in that** the method comprises the following additional steps:
g) introducing the product stream (11) into at least one further catalyst bed (9');
h) reacting at least a portion of the reactants of the product stream (11) in the further catalyst bed (9') to form a further product stream (12) comprising reactants and product.

14. The method as claimed in claim 12 or 13, **characterized in that** the reaction is an exothermic reaction with heterogeneous catalysis.

15. The method as claimed in any of claims 12 to 14, wherein the reactant stream (10) is preheated in step (c) to a temperature of at least 300°C, preferably at least 370°C, more preferably at least 380°C.

16. The use of the device as claimed in any of claims 1 to 11 in a method as claimed in any of claims 12 to 15.

## Revendications

1. Dispositif de synthèse, en particulier dispositif de synthèse destiné à des réactions exothermiques à catalyse hétérogène, ce dispositif de synthèse (13) comprenant les composants suivants :
a) un récipient sous pression (14) qui comprend une entrée (15) et une sortie (16) destinées à un fluide ;
b) au moins un lit de catalyseur (9) qui est disposé à l'intérieur du récipient sous pression (14) ;
c) au moins un échangeur de chaleur (7, 8), l'échangeur de chaleur (7, 8) étant disposé dans le trajet d'écoulement du fluide entre l'entrée (15) du récipient sous pression (14) et le lit de catalyseur (9) de manière à ce que le fluide entrant dans le lit de catalyseur (9) soit chauffé par le fluide sortant du lit de catalyseur (9) ;
l'échangeur de chaleur (7) étant disposé dans le dispositif de synthèse à l'extérieur du volume de réacteur occupé par le lit de catalyseur (9) dans le récipient sous pression (14), **caractérisé en ce que** l'échangeur de chaleur est conçu comme un échangeur de chaleur à plaques (7) et au moins un lit de catalyseur (9) est en forme de cylindre ou de cylindre creux et l'échangeur de chaleur à plaques (7) est disposé du côté intérieur du lit de catalyseur cylindrique creux (9) de sorte que ce dernier entoure de manière concentrique l'échangeur de chaleur à plaques (7).

2. Dispositif de synthèse selon la revendication 1, **caractérisé en ce que** le dispositif de synthèse (13) comprend une pluralité d'échangeurs de chaleur (7, 8).

3. Dispositif de synthèse selon la revendication 1 ou 2, **caractérisé en ce qu'**un échangeur de chaleur à plaques (7, 8) est disposé sous le lit de catalyseur (9) .

4. Dispositif de synthèse selon l'une des revendications 1 et 2, **caractérisé en ce qu'**un échangeur de chaleur à plaques (7, 8) est disposé dans la région située entre le lit de catalyseur (9) et une paroi intérieure du récipient sous pression (14).

5. Dispositif de synthèse selon l'une des revendications 1 à 4, **caractérisé en ce que** le dispositif de synthèse (13) comprend une pluralité de lits de catalyseurs (9) qui sont disposés dans le récipient sous pression (14) de préférence axialement les uns au dessus des autres.

6. Dispositif de synthèse selon l'une des revendications 1 à 5, **caractérisé en ce que** l'échangeur de chaleur à plaques (7) comprend une pluralité de plaques (20), un espace d'écoulement intermédiaire étant formé entre deux plaques adjacentes (20), et
(i) des espaces d'écoulement intermédiaires d'un premier groupe (5) étant en communication fluidique avec un premier conduit de fluide commun, perpendiculaire aux plaques (1) et étant isolés de l'environnement de l'échangeur de chaleur à plaques (7) ; et
(ii) des espaces d'écoulement intermédiaires d'un deuxième groupe (6) étant en communication fluidique avec l'environnement et étant isolés des espaces intermédiaires du premier groupe (5).

7. Dispositif de synthèse selon la revendication 6, **caractérisé en ce que** les espaces intermédiaires du premier groupe (5) et les espaces intermédiaires du deuxième groupe (6) sont disposés de manière alternée.

8. Dispositif de synthèse selon l'une des revendications 6 et 7, **caractérisé en ce que** les plaques individuelles (20) ont chacune une forme ronde.

9. Dispositif de synthèse selon l'une des revendications 6 à 8, **caractérisé en ce que** les espaces intermédiaires du deuxième groupe (6) comportent des ouvertures d'entrée latérales (4) afin de permettre à un fluide d'entrer dans les espaces intermédiaires du deuxième groupe (6).

10. Dispositif de synthèse selon l'une des revendications 6 à 9, les espaces intermédiaires du premier groupe (5) étant en communication fluidique avec une pluralité de deuxièmes conduits de fluide (2) s'étendant perpendiculairement aux plaques (20) et disposés de telle sorte qu'un fluide s'écoule à travers les espaces intermédiaires du premier groupe (5), en partant du premier conduit de fluide (1), radialement vers les deuxièmes conduits de fluide (2), ou qu'un fluide s'écoule à travers les espaces intermédiaires du deuxième groupe (5), en partant des deuxièmes conduits de fluide (2) radialement vers le premier conduit de fluide (1).

11. Dispositif de synthèse selon l'une des revendications 6 à 10, les espaces intermédiaires du deuxième groupe (6) étant en communication fluidique avec une pluralité de troisièmes conduits de fluide (3) s'étendant perpendiculairement aux plaques (20) et disposés de telle sorte que le fluide s'écoule à travers des espaces intermédiaires du deuxième groupe (6), en partant des ouvertures d'entrée latérales (4), radialement vers les troisièmes conduits de fluide (3).

12. Procédé de fabrication d'un produit, le procédé comprenant les étapes suivantes :
a) fournir un courant d'éduit (10) comprenant des réactifs et éventuellement des composants inertes ainsi qu'éventuellement un produit ;
b) introduire le courant d'éduit (10) dans un récipient sous pression,
c) préchauffer le courant d'éduit (10) dans un échangeur de chaleur qui est disposé dans le trajet d'écoulement du courant d'éduit (10) entre une entrée du récipient sous pression et au moins un lit de catalyseur (9) ;
d) transférer le courant d'éduit préchauffé (10) sur le lit de catalyseur (9) ;
e) faire réagir au moins une partie des réactifs du courant d'éduit (10) se trouvant sur le lit de catalyseur (9) pour former un courant de produit (11) comprenant des réactifs, un produit et éventuellement des composants inertes ; et
f) introduire le courant de produit (11) dans l'échangeur de chaleur, le courant de produit (11) étant refroidi ;
l'échangeur de chaleur étant conçu comme un échangeur de chaleur à plaques et les réactifs étant mis à réagir dans l'au moins un lit de catalyseur sous une commande de procédé adiabatique, **caractérisé en ce que** le courant d'éduit (10) comprend de l'hydrogène, de l'azote et éventuellement des composants inertes et le courant de produit (11) est de l'ammoniac.

13. Procédé selon la revendication 12, **caractérisé en ce que** le procédé comprend les étapes supplémentaires suivantes :
g) introduire le courant de produit (11) dans au moins un autre lit de catalyseur (9') ;
h) faire réagir au moins une partie des réactifs du courant de produit (11) dans l'autre lit de catalyseur (9') pour former un autre courant de produit (12) comprenant des réactifs et un produit.

14. Procédé selon la revendication 12 ou 13, **caractérisé en ce qu'**il s'agit d'une réaction exothermique à catalyse hétérogène.

15. Procédé selon l'une des revendications 12 à 14, le courant d'éduit (10) à l'étape (c) étant préchauffé à une température d'au moins 300 °C, de préférence d'au moins 370 °C, de manière particulièrement préférée d'au moins 380 °C.

16. Utilisation du dispositif selon l'une des revendications 1 à 11 dans un procédé selon l'une des revendications 12 à 15.
